# EUROPÄISCHE PATENTSCHRIFT

(11) **EP 2 525 091 B1**
(45) Veröffentlichungstag und Bekanntmachung des Hinweises auf die Patenterteilung: **28.06.2017**
(21) Anmeldenummer: 12164130.2
(22) Anmeldetag: 13.04.2012
(51) Int. Cl.: F03D 15/00

(54) **Antriebssystem für eine Windkraftanlage**
Drive system for a wind turbine
Système d'entraînement pour une éolienne

(30) Priorität: 17.05.2011 DE 102011101823; 31.08.2011 DE 102011081861
(43) Veröffentlichungstag der Anmeldung: 21.11.2012
(73) Patentinhaber: Siemens Aktiengesellschaft, 80333 München (DE)
(72) Erfinder: Sprenger, Georg, 46519 Alpen (DE)

(56) Entgegenhaltungen:
- EP-A2- 2 273 112
- DE-A1-102007 056 487
- US-A1- 2010 129 222
- US-A1- 2010 133 854
- US-A1- 2011 068 583

## Beschreibung

Die vorliegende Erfindung betrifft ein Antriebssystem für eine Windkraftanlage, das insbesondere zumindest eine mit einer Rotorwelle verbindbare Planetenradstufe umfaßt.

Grundsätzlich umfaßt ein Antriebsstrang einer Windkraftanlage Systemkomponenten, wie Netzanbindungselemente, Generatoren, Kupplungen, Getriebe und Rotorwellen. Netzseitig sind vielfach Umrichter vorgesehen. Bremsen sind oft in Form von mechanischen Bremsen an schnellaufenden Welle zwischen Getriebe und Generator vorgesehen, da dort Bremsmomente übersetzungsbedingt kleiner sind.

In EP 1 593 867 A1 ist eine Kupplung zur Übertragung großer Drehmomente beschrieben. Kernelement der Kupplung ist hierbei ein vorgespanntes elastomerhaltiges Konuslager. Dies ermöglicht, daß Kräfte, die auf die Kupplung aufgrund von großen Drehmomenten ausgeübt werden, hinreichend gedämpft werden können. Die aus EP 1 593 867 A1 bekannte Kupplung weist mehrere Kupplungselemente auf, die konstruktiv in der Weise in die Kupplung integriert sind, daß eine Trennung zu kuppelnder Teile leicht durchgeführt werden kann.

Aus EP 1 508 692 A1 ist eine Windkraftanlage mit einem einen Maschinenträger aufweisenden Gondelkopf bekannt, dem eine wenigstens einen Innenraum aufweisende Rotornabe vorgelagert ist. Ein Triebstrang der Windkraftanlage ist am Eintritt in den Gondelkopf über wenigstens ein Rotorlager am Maschinenträger abgestützt. Dabei sind ein Inneres des Gondelkopfes und ein Innenraum der Rotornabe über wenigstens einen Durchgang miteinander verbunden. Der Durchgang ist durch einen Innenring des Rotorlagers hindurchgeführt.

EP 1 045 139 A2 offenbart eine Windkraftanlage mit einem Rotor, dessen Rotornabe in einem auf einem Rotorträger angeordneten Wälzlager gelagert und mit einem zweistufigen, eine Antriebsstufe und eine Abtriebsstufe aufweisenden Planetengetriebe verbunden ist. Eine Ausgangswelle der Planetenstufe ist über eine Kupplung an einen Generator gekoppelt. Ein Innenring des Wälzlagers ist mit der Rotornabe und rotierenden Teilen des Planetengetriebes lösbar verbunden. Darüber hinaus ist ein Gehäuse des Generators mit dem Planetengetriebe lösbar zu einem Triebstrangmodul verbunden. Das Triebstrangmodul ist auf dem Rotorträger abgestützt und dadurch dynamisch entkoppelt.

In DE 10 2007 012408 A1 ist eine Windkraftanlage mit einem Rotorblatt, einer Nabe, einem ein Getriebe aufnehmenden Getriebegehäuse, einem einen Generator aufnehmenden Generatorgehäuse, einem Kopfträger, einem Turm und einem den Kopfträger drehbar auf dem Turm lagernden Azimutlager bekannt. Das Rotorlager, das Getriebegehäuse und das Generatorgehäuse sind zwischen der Nabe und dem Kopfträger angeordnet, als last-übertragende Bauteile ausgelegt und miteinander über Schraubverbindungen zusammengefügt.

Aus DE 10 2009 013 566 A1 ist eine Spannvorrichtung zur Befestigung einer Hohlwelle auf einer Hohlwelle bekannt, bei der die Hohlwelle einen Schrumpfbereich aufweist, in dem ein geschlossenes Langloch vorgesehen ist. Das Langloch erstreckt sich über den gesamten Schrumpfbereich. Es kann auch eine Vielzahl von Langlöchern vorgesehen sein, deren Projektion auf die Achse der Hohlwelle sich über die gesamt axiale Länge des Schrumpfbereichs erstreckt. Dabei ist ein Langloch geschlossen. Dadurch wird die Verformbarkeit der Hohlwelle erhöht. Die Verformung selbst wird durch eine Schrumpfscheibe erzielt.

In EP 1 884 672 A2 ist ein Schrumpfscheibe beschrieben, die eine Preßverbindung zwischen zwei konzentrischen Wellen ermöglicht. Die Schrumpfscheibe umfaßt einen Innenring und einen Außenring, die entlang einer konischen Kontaktfläche mittels einer Verschraubung gegeneinander verspannbar angeordnet sind. Außenring und Innenring sind aus einem Gußwerkstoff gefertigt.

EP 1 328 735 B1 betrifft eine Spannvorrichtung zur Befestigung einer Hohlwelle oder eines Hohlteils auf einer Vollwelle, bei der die Hohlwelle oder das Hohlteil an beiden Enden jeweils einen Innenkonus zur Aufnahme einer Adapterbuchse aufweist. Die Adapterbuchsen weisen jeweils einen entsprechenden Außenkonus auf und liegen auf der Vollwelle. Darüber hinaus ist eine Schrumpfscheibe mit zumindest einem Preßring vorgesehen. Die Schrumpfscheibe übt mittels des Preßrings eine Schrumpfkraft auf die Hohlwelle oder das Hohlteil aus. Des weiteren weist der Preßring einen axialen Längsschlitz auf. An einem von der Schrumpfscheibe abgewandten Ende der Hohlwelle oder des Hohlteils ist ein Klemmring zur axialen Fixierung der dortigen Adapterbuchse vorgesehen. Die Adapterbuchsen weisen keine Preßverbindungsfunktion, sondern dienen lediglich einem Wellenaußendurchmesserausgleich.

EP 2 273 112 A2 (General Electric), 12.01.2011, welche den nächstliegenden Stand der Technik darstellt, beschreibt einen Antriebsstrang für eine Windkraftanlage mit den Merkmalen des Oberbegriffs von Anspruch 1.

US 2010/0129222 A1 (General Electric), 27.05.2010, beschreibt eine Verbindungsanordnung zum Verbinden von Antriebswellen einer Windkraftanlage, welche eine Rotorwelle und eine Nabe sowie ein Getriebe mit einer Getriebeeingangswelle aufweist.

DE 10 2007 056 487 A1 (Landwehr), 28.05.2009, beschreibt eine Wellenverbindung, umfassend
a) eine erste Welle (1), die zumindest an einem axialen Ende einen Hohlmantel mit einer Mantelinnenfläche (1a) aufweist,
b) eine zweite Welle (2), die eine die Mantelinnenfläche (1a) umgebende äußere Umfangsfläche des Hohlmantels umgibt,
c) und ein Pressglied (3) mit einer Konusaußenfläche (3a) sowie optional ein Presszusatzglied (8) mit einem Hohlmantel mit einer Mantelinnenfläche (8a),
d) wobei die Mantelinnenfläche (1a, 8a) der ersten Welle (1) oder des optionalen Presszusatzglieds (8) eine Konusinnenfläche ist
e) und wobei das Pressglied (3) mit seiner Konusaußenfläche (3a) axial gegen die Konusinnenfläche (1a, 8a) gepresst ist und den Hohlmantel der ersten Welle (1) von innen mit einer radial nach außen wirkenden Presskraft beaufschlagt, um die Wellen (1, 2) in einem Pressverbund für die Übertragung eines Drehmoments miteinander zu verbinden.

In Windkraftanlagen bestehen hinsichtlich einer Verbindung eines getriebeseitigen Pitch-Rohrs mit von einem Anlagenhersteller oder -betreiber spezifizierten Anbauteilen, insbesondere Schleifringeinheiten, einzelfallabhängig höchst unterschiedliche Anforderungen. Dies erschwert eine Verwendung einheitlicher Pitch-Rohre für ausgewählte Getriebegrößen und führt daher zu erhöhten Kosten.

Der vorliegenden Erfindung liegt die Aufgabe zugrunde, ein Antriebssystem für eine Windkraftanlage zu schaffen, deren zumindest eine Getriebestufe sich auf einfache Weise mit einer Vielzahl von Generatoren unterschiedlicher Größe verbinden läßt.

Diese Aufgabe wird erfindungsgemäß durch ein Antriebssystem mit den in Anspruch 1 genannten Merkmalen gelöst. Vorteilhafte Weiterbildungen der vorliegenden Erfindung sind in den abhängigen Ansprüchen angegeben.

Das erfindungsgemäße Antriebssystem umfaßt zumindest eine mit einer Rotorwelle einer Windkraftanlage über eine Kupplung verbindbare Planetenradstufe. Der Planetenradstufe ist ein Hohlrad zugeordnet, mit dem mehrere in einem Planetenträger gelagerte Planetenräder in Eingriff stehen. Darüber hinaus ist ein mit einer Abtriebswelle der Planetenradstufe verbundenes Sonnenrad vorgesehen, das in Eingriff mit den Planetenrädern steht. Des weiteren ist die Abtriebswelle als Hohlwelle ausgebildet. Darüber hinaus ist ein sich axial über die gesamte Planetenstufe erstreckendes Pitch-Rohr vorgesehen, das als Hohlwelle ausgebildet und konzentrisch zum Hohlrad angeordnet ist. Das Pitch-Rohr kann beispielsweise zur Leitungsdurchführung zu in einer Rotornabe angeordneten Pitch-Stellantrieben genutzt werden. Mit dem Pitch-Rohr ist ein Adapterelement zum Verbinden des Pitch-Rohrs mit einem Generatoranbauteil verbunden, wobei das Generatoranbauteil eine Schleifringeinheit ist. Ferner weist das Pitch-Rohr an seinem generatorseitigen Ende eine durch einen Wandstärkensprung gebildete Zentrierschulter für das Adapterelement auf. Das Adapterelement umgibt das Pitch-Rohr an seinem generatorseitigen Ende radial und ist durch die Zentrierschulter radial sowie einseitig axial fixiert. Außerdem sind mehrere sich axial durch das Adapterelement erstreckende und in stirnseitige Gewindebohrungen am generatorseitigen Ende des Pitch-Rohr eingeführte Verschraubungen vorgesehen, durch die das Adapterelement am Pitch-Rohr befestigt ist. Zur Aufnahme eines Generatoranbauteils weist das Adapterelement eine Öffnung auf.

Die erfindungsgemäße Verwendung des Adapterelements ermöglicht eine Verwendung von Pitch-Rohren mit deutlich kleinerem Außendurchmesser als bisher üblich. Auf diese Weise können Getriebe kompakter konstruiert werden. Darüber hinaus kann mit der vorliegenden Erfindung für mehrere Getriebegrößen ein einheitliches Pitch-Rohr verwendet werden. Durch unterschiedliche Adapterausführungen kann individuellen Anforderungen von Anlagenbauern oder -betreibern hinsichtlich anlagen- bzw. generatorseitiger Anschlußmaße Rechnung getragen werden.

Die Zentrierschulter kann beispielsweise durch eine ringartige äußere Aussparung am Pitch-Rohr gebildet sein. Alternativ dazu kann die Zentrierschulter auch durch eine ringartige innere Aussparung am Pitch-Rohr gebildet sein. Dies kann beispielsweise sinnvoll sein, um das Pitch-Rohr mit Generatoranbauteilen zu verbinden, die einen relativ kleinen Durchmesser aufweisen.

Entsprechend einer weiteren vorteilhaften Ausgestaltung der vorliegenden Erfindung kann das Adapterelement einen ringartigen stirnseitig am generatorseitigen Ende des Pitch-Rohrs anliegenden Fortsatz mit sich axial erstreckenden Durchgangsbohrungen für die Verschraubungen aufweisen. Dies ermöglicht eine Auswahl eines größeren Durchmessers der Öffnung am Adapterelement zur Aufnahme entsprechender Generatoranbauteile.

Eine besonders kompakte Bauweise ergibt sich entsprechend einer Weiterbildung der vorliegenden Erfindung, wenn ein Lager für die Rotorwelle der Windkraftanlage durch ein Hauptlager der zumindest einen Planetenradstufe gebildet ist. Bevorzugt sind dabei zwei Planetenradstufen vorgesehen. In diesem Fall ist das Hauptlager einer ersten rotorseitigen Planetenradstufe zugeordnet.

Die vorliegende Erfindung wird nachfolgend an einem Ausführungsbeispiel anhand der Zeichnung näher erläutert. Es zeigt
- Figur 1: eine schematische Darstellung eines Antriebssystems für eine Windkraftanlage,
- Figur 2: ein Adapterelement für ein Antriebssystem gemäß Figur 1,
- Figur 3: ein gegenüber Figur 2 abgewandeltes Adapterelement für ein Antriebssystem gemäß Figur 1.

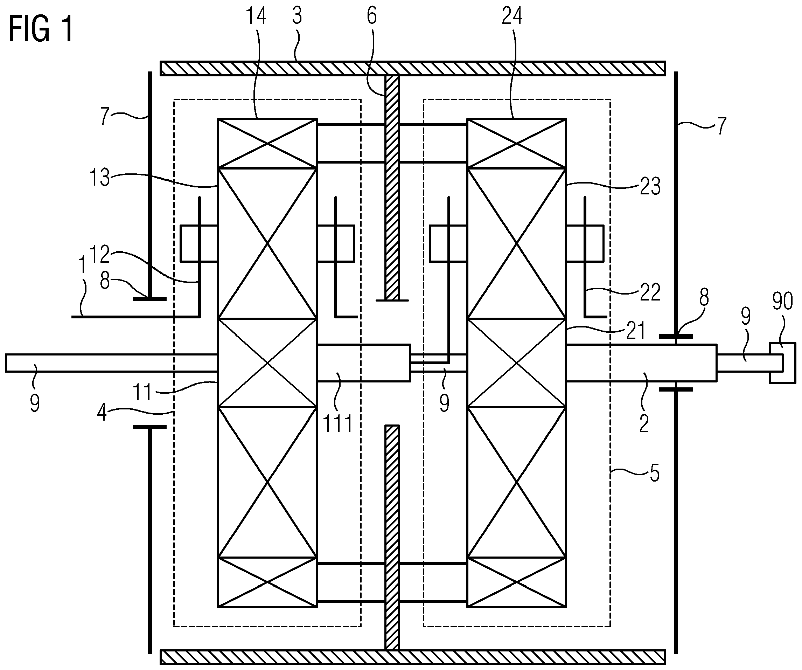

Das in Figur 1 dargestellte Antriebssystem für eine Windkraftanlage umfaßt ein Getriebe mit zwei Planetenradstufen 4, 5. Eine erste rotorseitige Planetenradstufe 4 weist dabei einen mit einer Rotorwelle 1 über eine in der Zeichnung nicht explizit dargestellte Kupplung verbundenen Planetenträger 12 auf. Der Planetenträger 12 ist beispielsweise mittels Wälzlagern, die ein Hauptlager des Getriebes bilden, in einem die beiden Planetenradstufen 4, 5 umgebenden Getriebegehäuse 3 gelagert, das stirnseitig jeweils durch einen Gehäusedeckel 7 abgeschlossen ist. Das Hauptlager des Getriebes bildet dabei auch Lager für die Rotorwelle 1 der Windkraftanlage.

Im Planetenträger 12 der ersten Planetenradstufe 4 sind mehrere Planetenräder 13 gelagert, die in Eingriff mit einem feststehenden Hohlrad 14 der ersten Planetenradstufe 4 stehen. Die Planetenräder 13 stehen darüber hinaus mit einem Sonnenrad 11 der ersten Planetenradstufe 4 in Eingriff, dessen Sonnenradwelle 111 mit einem Planetenträger 22 einer zweiten generatorseitigen Planetenradstufe 5 drehfest verbunden ist. Im Planetenträger 22 der zweiten Planetenradstufe 5 sind mehrere Planetenräder 23 gelagert, die einerseits mit einem feststehenden Hohlrad 24 und andererseits mit einem Sonnenrad 21 der zweiten Planetenradstufe 5 in Eingriff stehen. Mit dem Sonnenrad 21 der zweiten Planetenstufe 5 ist eine Abtriebswelle 2 des Getriebes verbunden. Die Abtriebswelle 2 ist ebenso wie die Sonnenradwelle 111 der ersten Planetenradstufe 4 als Hohlwelle ausgebildet. Zur Abtriebswelle 2 und zur Sonnenradwelle 111 der ersten Planetenradstufe 4 konzentrisch ist ein ebenfalls als Hohlwelle ausgebildetes Pitch-Rohr 9 angeordnet, das sich axial über das gesamte Antriebssystem erstreckt. Ferner weisen die Gehäusedeckel 7 Öffnungen 8 für die Rotor- 1 und die Abtriebswelle 2 auf.

In einem Innenraum des Getriebegehäuses 3 ist eine Trennwand 6 angeordnet, durch die der Innenraum in zwei Teilräume unterteilt ist, in denen jeweils eine Planetenstufe 4, 5 angeordnet ist. Die Trennwand 6 weist eine Öffnung auf, durch welche die Sonnenradwelle 111 der ersten Planetenradstufe 4 geführt ist. An der Trennwand 6 sind außerdem die Hohlräder 14, 24 der Planetenstufen 4, 5 befestigt, wobei jeweils eine Stirnseite eines Hohlrades 14, 24 an der Trennwand 6 anliegt. Grundsätzlich können die Hohlräder 14, 24 auch Teile des Getriebegehäuses 3 bilden bzw. in dieses integriert sein.

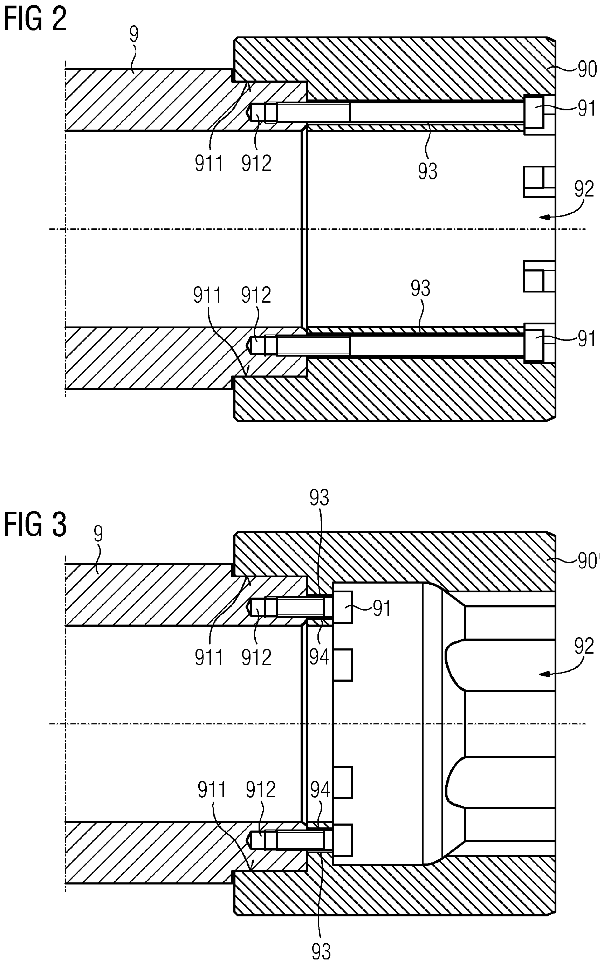

Mit dem Pitch-Rohr 9 ist ein Adapterelement 90 zum Verbinden des Pitch-Rohrs 9 mit einem Generatoranbauteil verbunden. Das Generatoranbaiteil ist eine Schleifringeinheit. Das Adapterelement 90 ist in Figur 2 im Detail dargestellt. Das Pitch-Rohr 9 weist an seinem generatorseitigen Ende eine durch einen Wandstärkensprung gebildete Zentrierschulter 911 für das Adapterelement 90 auf. Das Adapterelement 90 umgibt das Pitch-Rohr 9 an seinem generatorseitigen Ende radial und ist durch die Zentrierschulter 911 radial sowie einseitig axial fixiert. Die Zentrierschulter 911 ist beispielsweise durch eine ringartige äußere Aussparung am Pitch-Rohr 9 gebildet. Grundsätzlich könnte die Zentrierschulter 911 entsprechend einer alternativen Ausführungsform auch durch eine ringartige innere Aussparung am Pitch-Rohr 9 gebildet sein. Dies kann beispielsweise sinnvoll sein, um das Pitch-Rohr 9 mit Generatoranbauteilen zu verbinden, die einen relativ kleinen Durchmesser aufweisen.

Durch axiale Durchgangsbohrungen 93 im Adapterelement 90 erstrecken sich mehrere Verschraubungen 91, die in stirnseitige Gewindebohrungen 912 am generatorseitigen Ende des Pitch-Rohrs 9 eingeführt sind, und durch die das Adapterelement 90 am Pitch-Rohr 9 befestigt ist. Darüber hinaus ist am Adapterelement 90 eine Öffnung 92 zur Aufnahme eines Stutzens eines Generatoranbauteils vorgesehen, wobei die Öffnung 92 hinsichtlich ihres Durchmessers an ein anzuschließendes Generatoranbauteil angepaßt ist.

Das in Figur 3 dargestellte Adapterelement 90' unterscheidet sich vom Adapterelement 90 gemäß Figur 2 dadurch, daß ein ringartiger stirnseitig am generatorseitigen Ende des Pitch-Rohrs 9 anliegender Fortsatz 94 mit sich axial erstreckenden Durchgangsbohrungen 93 für die Verschraubungen 91 vorgesehen ist. Hierdurch kann ein größerer Durchmesser der Öffnung 92 am Adapterelement 90' zur Aufnahme entsprechender Generatoranbauteile gewählt werden.

Die Anwendung der vorliegenden Erfindung ist nicht auf das beschriebene Ausführungsbeispiel beschränkt.

## Patentansprüche

1. Antriebssystem für eine Windkraftanlage mit
- zumindest einer mit einer Rotorwelle (1) einer Windkraftanlage über eine Kupplung verbindbaren Planetenradstufe (4),
- einem der Planetenradstufe (4, 5) zugeordneten Hohlrad (14, 24),
- mehreren in einem Planetenträger (12, 22) gelagerten Planetenrädern (13, 23), die in Eingriff mit dem Hohlrad (14, 24) stehen,
- einem mit einer Abtriebswelle (2) der Planetenradstufe (5) verbundenen Sonnenrad (21), das in Eingriff mit den Planetenrädern (23) steht, wobei die Abtriebswelle (2) als Hohlwelle ausgebildet ist, und
- einem sich axial über die gesamte Planetenstufe (4, 5) erstreckenden Pitch-Rohr (9), das als Hohlwelle ausgebildet und konzentrisch zum Hohlrad (14, 24) angeordnet ist, **gekennzeichnet durch**
- ein mit dem Pitch-Rohr (9) verbundenes Adapterelement (90) zum Verbinden des Pitch-Rohrs (9) mit einer Schleifringeinheit, wobei das Pitch-Rohr (9) an seinem generatorseitigen Ende eine durch einen Wandstärkensprung gebildete Zentrierschulter (911) für das Adapterelement (90) aufweist, welches das Pitch-Rohr (9) an seinem generatorseitigen Ende radial umgibt und durch die Zentrierschulter (911) radial sowie einseitig axial fixiert ist,
- mehrere sich axial durch das Adapterelement (90) erstreckende und in stirnseitige Gewindebohrungen (912) am generatorseitigen Ende des Pitch-Rohrs (9) eingeführte Verschraubungen (91), durch die das Adapterelement (90) am Pitch-Rohr (9) befestigt ist, und
- eine Öffnung (92) am Adapterelement (90) zur Aufnahme der Schleifringeinheit.

2. Antriebssystem nach Anspruch 1,
bei dem die Zentrierschulter (911) durch eine ringartige äußere Aussparung am Pitch-Rohr (9) gebildet ist.

3. Antriebssystem nach Anspruch 1,
bei dem die Zentrierschulter (911) durch eine ringartige innere Aussparung am Pitch-Rohr (9) gebildet ist.

4. Antriebssystem nach einem der Ansprüche 1 bis 3,
bei dem das Adapterelement (90) einen ringartigen stirnseitig am generatorseitigen Ende des Pitch-Rohrs anliegenden Fortsatz (94) mit sich axial erstreckenden Durchgangsbohrungen (93) für die Verschraubungen (91) aufweist.

5. Antriebssystem nach einem der Ansprüche 1 bis 4,
bei dem ein Lager für die Rotorwelle (1) der Windkraftanlage durch ein Hauptlager der zumindest einen Planetenradstufe (4, 5) gebildet ist.

6. Antriebssystem nach Anspruch 5,
bei dem zwei Planetenradstufen (4, 5) vorgesehen sind, und bei dem das Hauptlager einer ersten rotorseitigen Planetenradstufe (4) zugeordnet ist.

## Claims

1. Drive system for a wind turbine, said drive system comprising
- at least one planetary gear stage (4) which can be coupled to a rotor shaft (1) of a wind turbine by way of a clutch,
- an annulus gear (14, 24) associated with the planetary gear stage (4, 5),
- a plurality of planetary gears (13, 23) mounted in a planetary carrier (12, 22) and engaged with the annulus gear (14, 24),
- a sun gear (21) connected to a driven shaft (2) of the planetary gear stage (5) and engaged with the planetary gears (23), wherein the driven shaft (2) is embodied as a hollow shaft, and
- a pitch tube (9) which extends axially over the entire planetary stage (4, 5), is embodied as a hollow shaft and is arranged concentrically with the annulus gear (14, 24),
**characterised by**
- an adapter element (90) connected to the pitch tube (9) for the purpose of connecting the pitch tube (9) to a slip ring unit, wherein at its generator-side end the pitch tube (9) has a centring shoulder (911) created by an abrupt change in wall thickness for the adapter element (90), which radially encloses the pitch tube (9) at its generator-side end and is fixed in position radially as well as axially on one side by means of the centring shoulder (911),
- a plurality of screw-type connection fittings (91) extending axially through the adapter element (90) and introduced into face-side threaded holes (912) at the generator-side end of the pitch tube (9), the adapter element (90) being secured to the pitch tube (9) by means of said connection fittings (91), and
- an opening (92) on the adapter element (90) for receiving the slip ring unit.

2. Drive system according to claim 1,
wherein the centring shoulder (911) is formed by means of an annular external recess on the pitch tube (9).

3. Drive system according to claim 1,
wherein the centring shoulder (911) is formed by means of an annular internal recess on the pitch tube (9).

4. Drive system according to one of claims 1 to 3,
wherein the adapter element (90) has an annular extension (94) bearing on the face side against the generator-side end of the pitch tube and having axially extending through-holes (93) for the screw-type connection fittings (91).

5. Drive system according to one of claims 1 to 4,
wherein a bearing for the rotor shaft (1) of the wind turbine is formed by means of a main bearing of the at least one planetary gear stage (4, 5).

6. Drive system according to claim 5,
wherein two planetary gear stages (4, 5) are provided, and wherein the main bearing is associated with a first rotor-side planetary gear stage (4).

## Revendications

1. Système d'entraînement pour une éolienne, comprenant
- au moins un étage (4) de roue satellite, pouvant être relié à un arbre (1) rotorique d'une éolienne par un accouplement,
- une roue (14, 24) à denture intérieure associée à l'étage (4, 5) de roue satellite,
- plusieurs roues (13, 23) satellites, qui sont montées dans un porte-satellite (12, 22) et qui engrènent dans la roue (14, 24) à denture intérieure,
- une roue (21) solaire, qui est reliée à un arbre (2) mené de l'étage (5) de roue satellite et qui est en prise avec les roues (23) satellites, l'arbre (2) mené étant constitué en arbre creux et
- un tube (9) pitch, qui s'étend axialement sur tout l'étage (4, 5) satellite, qui est constitué sous la forme d'un arbre creux et qui est disposé concentriquement à la roue (14, 24) à denture intérieure,
**caractérisé par**
- un élément (90) formant adaptateur, relié au tube (9) Pitch, pour relier le tube (9) pitch à une unité à bague collectrice, le tube (9) pitch ayant, à son extrémité du côté de la génératrice, un épaulement (911) de centrage, formé par un saut d'épaisseur de paroi, de l'élément (90) formant adaptateur, lequel entoure radialement le tube (9) pitch, à son extrémité du côté de la génératrice, et est immobilisé radialement ainsi qu'unilatéralement axialement par l'épaulement (911) de centrage,
- plusieurs vissages (91), traversant l'élément (90) formant adaptateur et introduits dans des taraudages (912) du côté frontal, à l'extrémité du côté de la génératrice, du tube (9) pitch, vissages par lesquels l'élément (90) formant adaptateur est fixé au tube (9) pitch et
- une ouverture (92) à l'élément (90) d'adaptateur, pour la réception de l'unité à bague collectrice.

2. Système d'entraînement suivant la revendication 1,
dans lequel l'épaulement (911) de centrage est formé par un évidement extérieur de type annulaire du tube (9) pitch.

3. Système d'entraînement suivant la revendication 1,
dans lequel l'épaulement (911) de centrage est formé par un évidement intérieur, de type annulaire, du tube (9) pitch.

4. Système d'entraînement suivant l'une des revendications 1 à 3,
dans lequel l'élément (90) formant adaptateur a un prolongement (94), de type annulaire, s'appliquant du côté frontal, à l'extrémité du côté de la génératrice du tube pitch et ayant des trous traversants s'étendant axialement pour les vissages (91).

5. Système d'entraînement suivant l'une des revendication 1 à 4,
dans lequel un palier, pour l'arbre (1) rotorique de l'éolienne, est formé d'un palier principal du au moins un étage (4, 5) de roue satellite.

6. Système d'entraînement suivant la revendication 5,
dans lequel il est prévu deux étages (4, 5) de roue satellite et dans lequel le palier principal est associé à un premier étage (4) de roue satellite du côté du rotor.
